Europäisches Patentamt

European Patent Office

Office européen des brevets

(11) Numéro de publication: **0 387 465**
**A1**

## (12) DEMANDE DE BREVET EUROPEEN

(21) Numéro de dépôt: **89500044.6**

(51) Int. Cl.5: **A01G 25/09**

(22) Date de dépôt: **07.04.89**

(30) Priorité: **14.03.89 ES 8900821**

(43) Date de publication de la demande:
**19.09.90 Bulletin 90/38**

(84) Etats contractants désignés:
**AT BE CH DE FR GB GR IT LI LU NL SE**

(71) Demandeur: **Prieto de Lario, Antonio**
**38, rue La Marroquina**
**E-28030 Madrid(ES)**

(72) Inventeur: **Prieto de Lario, Antonio**
**38, rue La Marroquina**
**E-28030 Madrid(ES)**

(74) Mandataire: **Alonso Langle, Emilio Juan**
**c/o UDAPI, S.L. Segre, 18, Bajo**
**E-28002 Madrid(ES)**

(54) **Machine d'arrosage perfectionnée.**

(57) La machine d'arrosage est structurée à partir d'un chassis (1), avec un tuyau (2) d'approvisionnement de l'eau d'arrosage faisant partie dudit chassis et muni d'une pluralité de trous d'aspersion (3) uniformément répartis.

Le chassis (1) est convenablement structuré pour être supporté par une pluralité de colonnes roulantes (4) lesquelles doivent avoir de préférence un profil triangulaire constitué par deux traverses obliques en vis-à-vis.

Les traverses obliques étant reliées à leur partie inférieure par une traverse (5) munie de quatre roues actionnées par un moteur, celui-ci étant synchronisé avec ceux des autres colonnes de la machine.

Les roues sont positionnées et actionnées de telle manière qu'une au moins des roues motrices soit toujours en contact avec le sol, de manière à assurer la marche de la colonne roulante en même temps que le reste des colonnes de la machine.

EP 0 387 465 A1

# MACHINE D'ARROSAGE PERFECTIONNEE

## PROPOS DE L'INVENTION

La présente invention est en référence à une machine d'arrosage, de celles généralement connues comme du type des "pivots" ou des latéraux, fournies d'un châssis d'une longueur considérable habituellement surpassant les cent mètres, dont on a distribué uniformément au long de celui-ci une série de colonnes roulantes, motorisées et dûment synchronisées, avec un tuyau faissant partie dudit châssis sur lequel, à son tour, on établisse, uniformément distribuées, des embouchures d'aspersion, de sorte que la machine est capable d'arroser une bande de terrain si ample que la machine est longue, en marchant au long de ladite bande avec une vitesse adéquate de sorte que, grâce au débit et à la distribution des embouchures d'arrosage, il puisse se produire le niveau adéquate d'arrosage sur le terrain en même temps que la machine "balaye" celui-ci.

## ANTECEDENTS DE L'INVENTION

Les citées colonnes roulantes se matérialissent, dans ce type de machines d'arrosage, en une structure adoptant un profil triangulaire, pour ajouter à son sommet ledit châssis alors que sa branche horizontale inférieure se prolongue pour recevoir par ses extrémités, des roues permettant son déplacement sur le terrain, étant au moins une de ces roues motrice, avec le concours du correspondant moteur d'activage, qui doit être convénablement synchronisé avec les moteurs des colonnes roulantes restantes, à l'object de permettre le déplacement homogène du châssis entier de la machine.

Le problème présenté par ces machines d'arrosage c'est que, quand l'une de ces colonnes roulantes trouve un obstacle dans le terrain, comme par exemple, une brusque dépression, une fossé de drainage, un canal d'irrigation, etc., la colonne roulante ou la tour correspondante perd sa stabilité, ce qui provoque des torsions dans le châssis pouvant abîmer sa structure, ou le faire perdre sa motricité, forçant les colonnes roulantes qui forment son encadrement à la traîner, avec la conséquente répercussion négative sur le châssis.

Ce problème a eté resolu jusqu'à présent par moyen de des oeuvres de maçonnerie, fixes ou démontables, telles que des ponts, des rampes, etc., pour permettre le passage de chacune des colonnes roulantes ou de la tour de la machine d'arrosage.

C'est évident que ces oeuvres doivent être répétées chaque fois que la machine d'arrosage trouve un obstacle comme on a cité avant, et tant de fois comme ladite machine ait d'axes motrices. Pour le cas d'une machine à déplacement latérale et dans des zones d'une hauté couche phréatique, avec plusieurs fossés de drainage s'oppossant au mouvement ou le progrès de la machine, le grand nombre de ponts à effectuer rend la solution si chère, que ce type de machines devient pratiquement inutilisable, à cause des faibles revenus que cela permet.

## DESCRIPTION DE L'INVENTION

La machine d'arrosage proposée par l'invention résoude cette problème à satisfaction pleine et d'une manière extraordinairement simple et économique.

A cet égard, et plus concrétement, les perfectionnéments de l'invention consistent à prolonger l'axe ou traverse inférieure de l'armature constituant chaque colonne roulante, et établir dans le même quatre roues au lieu des deux roues classiques; ces roues peuvent être équidistantes entre elles ou non, et elles peuvent être accouplées de la manière qu'on trouve plus convenable, ayant pour but qu'au moins une roue motrice soit toujours en contact avec le terrain, pour qu'elle fasse avancer la machine, et qu'au moins trois roues s'appuyent sur le terrain, à moins qu'il ne s'agit des roues extrémes, parce-que dans ce cas, il suffira d'avoir deux roues appuyées seulement, tout ceci de manière d'assurer la marche de la colonne roulante en même temps que le reste des colonnes ou tours de la machine, et d'une parfaite stabilité de la colonne dans le sens de capotage, stabilité qu'on étend par nécessité à toute la machine.

## DESCRIPTION DES DESSINS

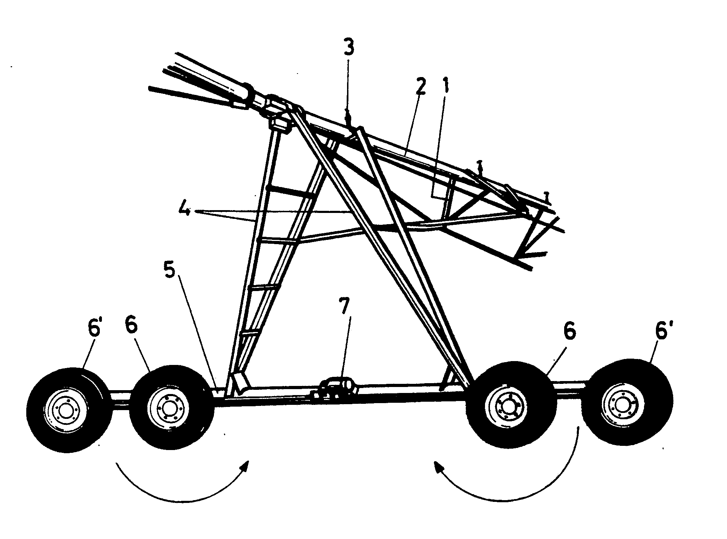

Pour completer la description qu'on est en train de faire, et à l'object d'aider une meilleure compréhension des caractéristiques de l'invention, on accompagne à cette mémoire descriptive, comme partie intégrale de la même, une feuille unique de plans, dans laquelle on a représenté, avec caractère illustratif et non limitatif et dans sa figure unique, une vue partielle en perspective d'une machine d'arrosage réalisée en harmonie avec les perfectionnéments object de la présente invention, et plus concrétement en correspondance avec l'une de ses colonnes roulantes et motorisées.

## REALISATION PREFERENTE DE L'INVENTION

A la vue de cette figure, on peut observer comment la machine d'arrosage que l'on préconise, à la façon d'une machine conventionnelle quelconque de ce type, est structurée à partir d'un châssis (1) (usage structurel travaillant à traction et compréssion), d'une longueur considérable, dans lequel participe le tuyeau (2) d'approvisionnément de l'eau d'arrosément, fourni d'une pluralité d'embouchures d'aspersion (3), uniformément distribuées, étant le châssis convénablement structuré (1) pour être supporté pour une pluralité de colonnes roulantes (4), lesquelles doivent préférablément adopter un profil triangulaire, constitués par deux traverses obliques, en correspondance avec la propre référence (4), dont elles reçoivent, en correspondance avec leur sommet, le châssis, les traverses obliques (4) sortant d'une traverse ou axe inférieur (5) fourni de des roues (6) actionées à travers d'un groupe moteur (7) qui doit être convénablement synchronisé avec ceux en existence dans les autres colonnes ou tours (4) de la machine, pour permettre à celle-ci d'avancer au long de toute la bande de terrain que la machine doit arroser.

A partir de cette structuration basique pour la machine d'arrosage qu'on préconise, celle-ci centre ses caractéristiques sur le fait que l'axe ou traverse inférieure citée (5) de ses colonnes roulantes (4), dont la diréction est en rapport avec celle de la marche de la machine, se prolonge substantiellement bien vers devant comme en arrière pour recevoir une paire de roues complémentaires (6) mettant en valeur considérablément la base d'appui de la machine et par conséquence, la stabilité de celle-ci et qu'on distribue de manière que, comme on a dit avant, en trouvant un obstacle, celui-ci puisse être dépassé sans être obligé d'établir dans le même aucune oeuvre de maçonnerie, dû au simple fait qu'au moins deux roues extrèmes au moins (6) vont être en contact avec le terrain, ou bien l'une des dites roues extrèmes (6) et les deux roues internes (6'), et qu'en même temps, une des roues en contact avec le terrain va être motrice, et le moteur (7) doit à son tour actionner une des roues extrèmes minimum (6) et une des roues intermoyennes (6'), pour obténir de cette manière, d'une façon complémentaire et comme on a dit avant, que la tour ne perd pas sa stabilité jamais, ni son effect automotrice non plus, et par conséquence, elle ne puisse pas rester en retard par rapport aux tours adjacentes, avec la conséquente tendance au capotage que ceci voudrait dire.

Il reste seulement indiquer finalément que la réprésentation de la figure correspond à une réalisation pratique dans laquelle, à cause des caractéristiques du terrain, on ait bésoin d'un niveau minime de prestations du point de vue de la stabilité, mais qu'en même temps les roues (6') pourraient être déplacées vers l'intérieur en rapport avec les flèches paraissant sur la figure, en même temps que les roues (6') puissent être à une hauteur plus grande ou plus petite par rapport avec les roues (6) à l'object d'absorber les petites pentes du terrain, et celles-ci peuvent être même de diamètre différent pour atteindre le même but.

Nous considérons que ce n'est pas nécessaire de rendre cette description plus extense pour qu'un expert quelconque dans cette matière se rend compte de l'atteinte de l'invention et des avantages derivées de celle-ci.

Les matériaux, la forme, le volume et la disposition des éléments seront susceptibles de variation, si cela ne compromet pas à l'essentialité de l'invention ou l'altère.

Les termes dans lesquels on a décrit cette mémoire devront être toujours pris en ample sens et non limitatif.

## Revendications

1ère.- Machine d'arrosage perfectionée, qu'étant du type de pivots, c'est-à-dire, du type incorporant un châssis de considérable longueur, transversale par rapport à une ample bande d'arrosage, châssis restant sur des colonnes roulantes ou tours uniformément distribuées, motorisées et synchronisées, faisant partie du châssis supérieur un tuyeau fourni d'une pluralité d'embouchures d'arrosage uniformément distribuées, se caractérisant essentiellement parce-que chacune de ses colonnes roulantes, avec le classique profil triangulaire et soutenant le paire de roues établies sur sa traverse inférieure, présente ladite traverse substantiellement surdimensionnée, prolongée vers devant et en arrière, incorporant en plus sur ces secteurs prolongés, deux roues complémentaires, identiques à celles intermoyennes, ayant prévu que les quatre roues de la colonne roulante soient distribuées dans celle-ci de manière qu'en face aux irregularités ou obstacles du terrain, au moins les deux roues extrèmes se mettent en contact avec celui-là, ou bien une des roues extrèmes et les deux roues intermoyennes, et avec la peculiarité, en plus, que le groupe motrice aidant ladite colonne roulante transmet son mouvement au moins à l'une des roues extrèmes et à l'une des roues intermèdes.

Office européen
des brevets

RAPPORT DE RECHERCHE EUROPEENNE

Numero de la demande

EP    89 50 0044

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3653400 (CAOTES)<br>* colonne 1, lignes 1 - 57 *<br>* colonne 2, ligne 74 - colonne 3, ligne 8 *<br>* colonne 3, ligne 56 - colonne 4, ligne 23; figures 1, 2, 4-6 *<br>--- | 1 | A01G25/09 |
| A | FR-A-2440151 (LINDSAY MANUFACTURING COMPAGNY)<br>* page 4, lignes 7 - 16; figures 1, 2, 12 *<br>----- | 1 | |

|  |  |  | DOMAINES TECHNIQUES RECHERCHES (Int. Cl.5) |
|---|---|---|---|
|  |  |  | A01G |

Le présent rapport a été établi pour toutes les revendications

| Lieu de la recherche | Date d'achèvement de la recherche | Examinateur |
|---|---|---|
| LA HAYE | 12 JUIN 1990 | PERNEY Y. |